(19) Europäisches Patentamt
European Patent Office
Office européen des brevets

(11) EP 2 312 322 A1

(12) EUROPEAN PATENT APPLICATION
published in accordance with Art. 153(4) EPC

(43) Date of publication:
20.04.2011 Bulletin 2011/16

(51) Int Cl.:
G01N 35/08 (2006.01)     B01J 19/00 (2006.01)
B81B 1/00 (2006.01)     G01N 37/00 (2006.01)

(21) Application number: 09804859.8

(22) Date of filing: 16.07.2009

(86) International application number:
PCT/JP2009/062881

(87) International publication number:
WO 2010/016372 (11.02.2010 Gazette 2010/06)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 06.08.2008 JP 2008202558

(71) Applicant: Konica Minolta Opto, Inc.
Hachioji-shi
Tokyo 192-8505 (JP)

(72) Inventors:
• GOSHIMA Takehiko
Hachioji-shi
Tokyo 192-8505 (JP)
• SEKIHARA Kanji
Hachioji-shi
Tokyo 192-8505 (JP)

(74) Representative: Henkel, Feiler & Hänzel
Patentanwälte
Maximiliansplatz 21
80333 München (DE)

(54) **MICROCHIP**

(57) Provided is a microchip having a protrusion to which a device for introducing or discharging a liquid sample, a device for causing the liquid sample to flow, or another device is connected, the protrusion retaining strength. The microchip includes a resin substrate (2) which has a fine flow channel (3), a penetrated hole (6) communicating with the fine flow channel (3), and a protrusion (5) formed so as to surround the penetrated hole (6) and project in the thickness direction. The protrusion (5) has a wall thickness (W) and a height (T) satisfying the relationship: (T/10)≤W≤(T/2).

FIG. 2

Printed by Jouve, 75001 PARIS (FR)

Description

## TECHNICAL FIELD

The present invention related to a microchip produced by joining a resin substrate in which a flow channel groove is formed.

## BACKGROUND

Devices referred to as microanalysis chips or μTAS (Micro Total Analysis Systems) have been put to practical use, in which using a microfabrication technology, fine flow channels and circuits are formed on a silicon or glass substrate, and thereby chemical reaction, separation, or analysis of a liquid sample such as a nucleic acid, protein, or blood is carried out in a micro-space. It is conceivable that these microchips have such advantages that the used amount of a sample or a reagent or the discharge amount of waste liquid is reduced, and sanall-foot print, portable, and inexpensive systems are realized.

Microchips are produced in such a manner that 2 members in which at least one member thereof having been subjected to microfabrication are bonded together. Conventionally, for microchips, glass substrates are used and various microfabrication methods have been proposed. However, such glass substrates are unsuitable for mass production and exhibit extremely high cost. Therefore, the development of resin microchips, which are inexpensive and disposable, has been desired.

To produce a resin microchip, a resin substrate having a flow channel groove on the surface and a resin substrate to cover a flow channel groove are joined. Such a resin substrate having a flow channel groove is produce by a method such as an injection molding method, a press molding method, or a mechanical processing method. Then, a resin substrate having a flow channel groove on the surface and a resin substrate for covering are joined together in which the flow channel groove is placed on the inward side. Via this joining, a resin substrate for covering functions as a lid (a cover) of a flow channel groove and then a fine flow channel is formed by the flow channel groove. Thereby, a microchip having such a fine flow channel groove in the interior is produced. To join resin substrates together, listed are a welding method to join resin substrates by heating using a heating plate, hot air, a heating roll, ultrasound, vibration, or a laser; an adhesion method to join resin substrates using an adhesive or a solvent; a joining method utilising adhesion properties of resin substrates themselves; and a substrate joining method via surface treatment such as plasma treatment for resin substrates.

Further, in a resin substrate having a flow channel groove, a penetrated hole, which penetrates in the thickness direction of the resin substrate, is formed. This penetrated hole is connected to the flow channel groove. Still further, it is known that a resin substrate having a flow channel groove is provided with a cylindrical protrusion surrounding a penetrated hole on the surface of the opposite side of the surface where the flow channel groove is formed (for example, Patent Document 1). This protrusion is fitted with a tube or a nozzle to introduce a liquid sample into a fine flow channel or to discharge the liquid sample from the fine flow channel.

## PRIOR ART DOCUMENT

## PATENT DOCUMENT

Patent Document 1: Unexamined Japanese Patent Application Publication No. 2006-234600

## BRIEF DESCRIPTION OF THE INVENTION

## PROBLEMS TO BE SOLVED BY THE INVENTION

As described above, a protrusion provided around a penetrated hole is connected to a device to introduce or discharge a liquid sample and a device to allow a liquid sample to flow. Therefore, the protrusion needs to have strength in order to maintain such connection.

Further, since the amount of a liquid sample to be introduced into a fine flow channel is extremely small, when the introduction of the liquid sample and the Sowing and detection thereof are not carried out smoothly, the liquid sample having been introduced into the fine flow channel is evaporated and then the component concentration is changed. Therefore, in the above microchips, a liquid sample is required to be smoothly introduced into such a fine Bow channel. Further, it is necessary that a device to introduce a liquid sample into a fine flow channel and a device to allow the liquid sample to flow in the fine flow channel are easily inserted into or connected to a microchip. For example, it is necessary that a device such as an electrode or a pump is easily inserted into or connected to a microchip. In this manner, since a device is connected to a protrusion of a microchip, the protrusion needs to exhibit strength to maintain such connection.

Incidentally, it is necessary that a plurality of tests can be carried out in one microchip. Therefor, a microchip is preferably provided with a plurality of penetrated holes to introduce different kinds of liquid samples into a fine flow channel. For example, a plurality of penetrated holes are provided to introduce a liquid sample into a fine flow channel and then a different kind of liquid sample for each test is introduced into a fine flow channel using a different penetrated hole for the each test. In this manner, such penetrated holes are changed with respect to each test to introduce liquid samples, whereby contamination among the liquid samples due to a plurality of conducted tests can be prevented.

To carry out a plurality of tests in one microchip, it is necessary that a resin substrate is provided with a plurality of penetrated holes and then protrusions to be connected to a device are provided around each penetrated hole. To provide a large number of penetrated holes in a microchip of a limited size, the distance among the penetrated holes need to be shortened. For example, the thicknesses (wall thicknesses) of protrusions provided around penetrated holes are small, whereby the distance among the penetrated holes is allowed to be small and thereby a larger number of penetrated holes can be provided for a microchip. However, when the thickness (wall thickness) of such a protrusion is small, a problem is produced in which the strength of the protrusion is decreased by the reduced thickness.

Further, when a resin substrate having a protrusion is produced, in molding, heat input conditions and pressure conditions tend to be nonuniform in the vicinity of the protrusion, whereby molding accuracy tends to be degraded. As a result, the flatness accuracy of the surface in the periphery of the protrusion tends to be degraded. As the thickness (wall thickness) of a protrusion is large, during molding, a resin to form the protrusion tends to be hard to cool, whereby the transferability of a flow channel groove tends to be degraded. Thereby, in a resin substrate having such a flow channel groove, the flatness of the surface where the flow channel groove id formed, that is, the surface (the joint surface) to be joined to a resin substrate for covering tends to be degraded. When the flatness of the joint surface is degraded, a problem is noted that the joint strength between a resin substrate having a flow channel groove and a resin substrate for covering is decreased.

The present invention is to solve the above problems and an object thereof is to provide a microchip having a protrusion connected to a device to introduce or discharge a liquid sample and a device to allow a liquid sample to flow, in which the strength of the protrusion is maintained.

**MEANS TO SOLVE THE PROBLEMS**

A first embodiment of the present invention is a microchip configured to be capable of introducing a liquid sample through a penetrated hole, wherein a flow channel groove is formed on a surface of at least one resin substrate of the two resin substrates and the two resin substrates are joined together so that the surface on which the flow channel groove is formed is placed on an inward side; the penetrated hole communicatively connecting an outside and the flow channel groove is formed in at least one resin substrate of the two resign substrates; and, a protrusion having a shape, surrounding the penetrated hole, and projecting from a surface of an opposite side of the joined surface of the two resin substrates to an outside direction is formed in a part of the resin substrate where the penetrated hole is formed, characterized by that a wall thickness W in a tip portion of the protrusion and a height T ofthe protrusion satisfy the following relationship:

$$(T/10) \leq W \leq (T/2)$$

Further, a second embodiment of the present invention is a microchip configured to be capable of introducing a liquid sample through a penetrated hole, wherein a flow channel groove is formed on a surface of at least one resin substrate of the two resin substrates and the two resin substrates are joined together so that the surface on which the flow channel groove is formed is placed on an inward side; the penetrated hole communicatively connecting an outside and the flow channel groove is formed in at least one resin substrate of the two resin substrates; and a protrusion having a shape surrounding the penetrated hole and projected from a surface of an opposite side of the joined surface of the two resin substrates to an outside direction is formed, characterized by that a projected portion having small wall thickness is configured to be formed in an upper end portion of the protrusion via a step portion to be capable of inhibiting liquid dripping of a liquid sample to be introduced.

Further, a third embodiment of the present invention is the microchip according to the second, characterized by that a wall thickness W in a tip portion of the protrusion and a height T of the protrusion satisfy the following relationship:

$$(T/10) \leq W \leq (T/2)$$

Further, a fourth embodiment of the present invention is the microchip according to the first embodiment, characterized by that the tip portion of the protrusion has a flat surface.

Further, a fifth embodiment of the present invention is the microchip according to the first embodiment, characterized by that a projected portion having small wall thickness is formed in an upper end portion of the protrusion via a step portion to inhibit liquid dripping ofa liquid sample to be introduced.

Further, a sixth embodiment of the present invention is the microchip according to the second, third, or fifth embodiment, characterized by that the projected portion is formed via a step portion on an inside of an outer circumferential portion of the protrusion.

Further, a seventh embodiment of the present invention is a microchip configured to be capable of introducing a liquid sample through a penetrated hole, wherein a flow channel groove is formed on a surface of at least one resin substrate of the two resin substrates; the two resin substrates are joined together so that the surface on which the flow channel groove is formed is placed on an inward side; the penetrated hole communicatively connecting an outside and the flow channel groove is fanned in at least one resin substrate of the two resin substrates; and a protrusion having a shape surrounding the penetrated hole and projected from a surface of an opposite side of the joined surface of the two resin substrates to an outside direction is formed, characterized by that a tip portion of the protrusion has a curved surface.

## EFFECTS OF THE INVENTION

According to the present invention, with respect to the height T of a protrusion, the wall thickness W in the tip portion of the protrusion is set at (T/10) or more, whereby the strength of the protrusion can be adequately maintained. For example, when a protrusion is connected to a device to introduce or discharge a liquid sample through a penetrated hole and a device to allow a liquid sample to flow, the protrusion can be prevented from being broken due to such connection. Further, with respect to the height T of a protrusion, the wall thickness W in the tip portion of the protrusion is set at (T/2) or less, whereby the strength of the protrusion can be maintained with no decrease in the flatness of the joint surface of resin substrates.

Further, in the upper end portion of a protrusion, a projected portion is provided, whereby when an electrode or a liquid introducing device having been inserted into a penetrated hole is removed from the penetrated hole, liquid dripping of an introduced liquid can be inhibited.

Further, the tip portion of a protrusion is allowed to have a curved surface, whereby when an electrode or a device is inserted into a microchip, the tip portion functions as a guide for the insertion, and thereby such an electrode or a device is easily placed in the microchip.

Further, the tip portion of a protrusion is allowed to have a flat surface, whereby the contact area of a device placed in the protrusion and the protrusion is increased. Thereby, the sealing performance between the protrusion and the device is enhanced, and thereby leakage of a liquid sample in the protrusion can be prevented.

Further, the leading tip portion of a protrusion is formed on the inside of the outer circumferential portion of the protrusion, and thereby using the tip portion of the protrusion as a guide, an electrode or a device can be inserted into a penetrated hole for placement

## BRIEF DESCRIPTION OF THE DRAWINGS

FIG. 1 is a top view of a microchip according to the first embodiment of the present invention;
FIG. 2 is a sectional view of part of the microchip according to the first embodiment of the present invention, being a sectional view showing part of the II - II cross-section of the FIG. 1;
FIG. 3 is a sectional view of part of a microchip according to Modified Example 1;
FIG. 4 is a sectional view of part of a microchip according to Application Examples;
FIG. 5 is a sectional view ofpart of a microchip according to Modified Example 2;
FIG. 6 is a sectional view of part of a microchip according to Modified Example 3; and
FIG. 7 is the table showing the list of Examples.

## DESCRIPTION OF THE PREFERRED EMBODIMENT

A microchip according to the embodiment of the present invention will now be described with reference to FIG.

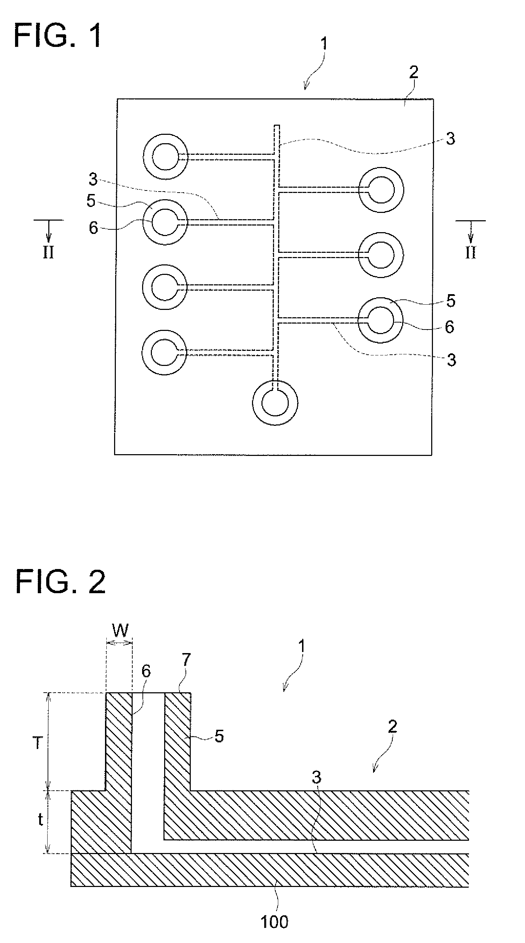

1 and FIG. 2. FIG. 1 is a top view of a microchip according to the embodiment of the present invention. FIG. 2 is a sectional view of part of the microchip according to the embodiment of the present invention, being a sectional view showing part of the II - II cross-section of FIG. 1.

A microchip I according to the present embodiment has a constitution having a resin substrate 2 and a resin substrate 100. On the surface of the resin substrate 2, a flow channel groove is formed. Further, the substrate 100, which serves as the joined counterpart of the resin substrate 2, is a flat plate substrate. Then, the surface where the flow channel groove is formed is placed on the inward side to join the resin substrate 2 and the resin substrate 100. Thereby, the resin substrate 100 functions as the lid (the cover) of the flow channel groove and then the flow channel groove forms a fine flow channel 3 to produce a microchip 1 having a fine flow channel 3 created by a flow channel groove in the interior.

Further, in the resin substrate 2, a penetrated hole 6, which penetrates in the thickness direction of the substrate, is formed. This penetrated hole 6 makes contact with the flow channel groove and connects to the flow channel groove from the side opposed to the surface where the resin substrate 2 and the resin substrate 100 are joined together. The resin substrate 2 and the resin substrate 100 are joined together, whereby an opening portion to connect the fine flow channel 3 and the outside is created. The penetrated hole 6 is connected to the flow channel groove, whereby the opening portion created by the penetrated hole 6 is connected to the fine flow channel 3. The opening portion (the penetrated hole 6) is a hole to introduce, store, or discharge gel, a liquid sample, or a buffer solution. The shape of the opening portion (the penetrated hole 6) may be any appropriate shape such as a circle or a rectangle. This opening portion (the penetrated hole 6) is connected to a tube or a nozzle provided for an analyzer, and then via this tube or nozzle, gel, a liquid sample, or a buffer solution is introduced into the fine flow channel 3 or discharged therefrom. Herein, such a penetrated hole may be formed in the resin substrate 100 or an opening portion may be formed.

Still further, as shown in FIG. 1 and FIG. 2, in the resin substrate 2, a cylindrical protrusion 5 is formed on the surface of the opposite side of the surface where a flow channel groove is formed. This protrusion 5 is projected in the thickness direction of the resin substrate 2 and provided around a penetrated hole 6. The protrusion 5 is formed to be united with the resin substrate 2. This protrusion 5 is fitted with a tube or a nozzle to introduce or discharge a liquid sample. Herein, the protrusion 5 shown in FIG. 1 has a cylindrical shape, but this is just one example, and the protrusion may have a polygonal shape.

The outer shape of the resin substrate 2 needs only to be a shape easy to handle and analyze, and the shape is preferably square or rectangular. As one example, the shape needs only to have a size of 10 mm square - 20 mm square, possibly having a size of 10 mm square - 100 mm square. Further, the inner diameter of the penetrated hole 6 needs only to be fitted to an analysis method or an analyzer, and, for example, the inner diameter needs only to be about 2 mem.

In view of enabling to reduce the used amount of an analysis sample and a reagent and of the production accuracy, transferability, and releasability of a molding die, with regard to the shape of a fine flow channel 3, both the width and the depth are preferably in the range of 10 μm - 200 μm with no specific limitation. Further, the width and depth of the fine flow channel 3 are determined based on the application of a microchip. Herein, the cross-section of the fine flow channel 3 may have a rectangular or curved surface shape.

The plate thickness of a resin substrate 2 where a flow channel has been formed is preferably 02. mm - 5 mm, more preferably 0.5 mm - 2 mm in view of molding performance. The plate thickness of a resin substrate 100 functioning as the lid (the cover) to cover a flow channel groove is preferably 02. mm - 5 mm, more preferably 0.5 mm - 2 mm in view of molding performance. Further, when no flow channel groove is formed in a resin substrate 100 functioning as the lid (the cover), a film (a sheet-shaped member) may be used instead of a plate-shaped member. In this case, the thickness of the film is preferably 30 μm - 300 μm, more preferably 50 μm - 150 μm.

Incidentally, the plate thickness of a resin substrate 2 where a flow channel groove has been formed is designated as the thickness t, and the height of a protrusion 5 is designated as the height T. In the present embodiment, the thickness t of the resin substrate 2 and the height T of the protrusion 5 satisfy the relationship represented by following Expression (1).

$$0.5 \times \text{thickness } t \leq \text{height } T \leq 10 \times \text{thickness } t \quad \text{Expression (1)}$$

Further, when the wall thickness of the tip portion of the protrusion 5 is designated as the thickness W. the thickness W of the tip portion of the protrusion 5 and the height T of the protrusion 5 satisfy the relationship represented by following Expression (2):

$$(T/10) \leq \text{thickness } W \leq (T/2) \quad \text{Expression (2)}$$

Herein, when the shape of the protrusion 5 is cylindrical, the difference between the radius of the outer circumference of the cylinder and the radius of the inner circumference thereof is defined as the thickness W of the wall thickness.

In the present embodiment, the diameter of a penetrated hole 6 is constant in the height direction of a protrusion 5. The outer diameter of the protrusion 5 is also constant in the height direction thereof Namely, the wall thickness W of the protrusion 5 is constant in the height direction thereof In this manner, in the microchip 1 according to the present embodiment, the wall thickness of the protrusion 5 is constant at every height Further, the leading tip portion 7 of the protrusion 5 has a flat surface.

As shown in Expression (2), when the wall thickness ofthe tip portion of a protrusion 5 is allowed to be at least (T/10), the strength of the protrusion 5 can be adequately maintained. Namely, when the thickness W of the protrusion 5 is allowed to be at least (T/10) of the height thereof, the strength of the protrusion 5 of a height T can be adequately maintained. For example, when a liquid samples is introduced into a microchip 1 or when a liquid sample in a fine flow channel 3 is allowed to flow, a protrusion 5 is prevented from being broken, whereby leakage of the liquid sample can be prevented.

Further, when the wall thickness of the tip portion of a protrusion 5 is allowed to be at most (T/2), the transferability of the joint surface is enhanced, whereby the flatness thereof can be maintained while the strength of the protrusion 5 is maintained. As the wall thickness of the protrusion 5 is large, during molding of a resin substrate 2, a rein to form the protrusion 5 becomes hard to cool, whereby the transferability of a flow channel groove tends to be degraded. Thereby, in the resin substrate 2, the flatness of the surface where a flow channel groove is formed tends to be degraded. The surface where the flow channel groove is formed is the surface (the joint surface) to be joined to a resin substrate 100 for covering. Therefore, when the flatness of the surface is degraded, the joint strength between the resin substrate 2 and the resin substrate 100 may be decreased. In contrast, as described in the microchip 1 according to the present embodiment, when the wall thickness of a protrusion 5 is allowed to be at most (T/2), the strength of the protrusion 5 can be maintained while the fatness of the joint surface of a resin substrate 2 is not degraded. Thereby, the resin substrate 2 and the resin substrate 100 can be tightly joined together.

Still further, the wall thickness of a protrusion 5 is allowed to be (T/10) - (T/2), more penetrated holes 6 can be provided for a resin substrate 2 while the strength of the protrusion 5 is maintained. Namely, as the wall thickness of the protrusion 5 is allowed to be small, the distance among penetrated holes 6 is shortened, whereby more penetrated holes 6 can be provided for the resin substrate 2. However, the strength of the protrusion 5 is decreased by the reduced thickness. Further, to maintain the strength of the protrusion 5, as the wall thickness is allowed to be large, the space of a resin substrate 2 where a protrusion 5 is provided is decreased by the increased thickness. Thereby, as the wall thickness is increased, the number of protrusions 5 provided for the resin substrate 2 is limited. Namely, as the wall thickness of the protrusion 5 is allowed to be large, the distance among penetrated holes 6 needs to be large. Thereby, the number of such penetrated holes 6 to be formed in the resin substrate 2 is limited. Therefore, as in the present embodiment, the wall thickness of a protrusion 5 is allowed to be (T/10) - (T/2), whereby more protrusions 5 (penetrated holes 6) can be provided for the resin substrate 2 while the strength of the protrusions 5 is adequately maintained. Thereby, using one microchip 1, a larger number of tests can be conducted.

Herein, the thickness W of the protrusion 5 is preferably 0.1 mm - 2.0 mm as one example.

For the resin substrates 2 and 100, a resin is used. Conditions for the resin include excellent molding properties (transferability and releasability), enhanced transparency, and low self-fluorescent properties with respect to UV radiation or visual light. For the resin substrates 2 and 100, for example, a thermoplastic resin is used. As the thermoplastic resin, it is preferable to use, for example, polycarbonate, polymethyl methacrylate, polystyrene, polyacrylonitrile, polyvinyl chloride, polyethylene terephthalate, Nylon 6, Nylon 66, polyvinyl acetate, polyvinylidene chloride, polypropylene, polyisoprene, polyethylene, polydimethylsiloxane, or cyclic polyolefin. Polymethyl methacrylate or cyclic polyolefin is specifically preferably used. Herein, for the resin substrates 2 and 100, the same material may be used or different materials may be used. Further, for a resin substrate 100 where no flow channel groove is formed, other than such a thermoplastic resin, a thermally curable resin or a UV curable resin may be used. As the thermally curable resin, polydimethylsiloxane is preferably used.

Resin substrates 2 and 100 can be produced by a method such as an extraction molding method, a T-die molding method, an inflation molding method, a calender molding method, an injection molding method, a press molding method, or a mechanical processing method. For example, using the injection molding method, a flow channel groove and a protrusion may be formed on the surface of a resin substrate, or using the mechanical processing method, a flow channel groove and a protrusion may be formed on the surface of a resin substrate.

Further, joining of a resin substrate 2 and a resin substrate 100 is carried out via a joining method based on the conventional technology. For example, using a heating plate, hot air, a heating roll, ultrasound, vibration, or a laser, the resin substrate 2 and the resin substrate 100 are joined together by heating. Alternatively, using an adhesive or a solvent, the resin substrate 2 and the resin substrate 100 may be joined together.

Herein, in the present embodiment, a penetrated hole 6 is formed in a resin substrate 2 in which a flow channel groove has been formed, and then a protrusion 5 is formed around the penetrated hole 6. However, a penetrated hole is formed in a resin substrate 100 serving as the joined counterpart and then a protrusion may be formed around the penetrated hole. Further, a flow channel groove is formed each in a resin substrate 2 and a resin substrate 100 and then the resin substrate 2 and the resin substrate 100 are joined together, whereby a microchip having a fine flow channel in the interior may be produced.

Further, the side surface of the inner circumferential portion of a protrusion 5 may be taper-shaped. The inner circumferential portion of the protrusion 5 is taper-shaped so that, for example, the diameter of a penetrated hole 6 is gradually increased toward the tip portion of the protrusion 5. Even when the side surface of the inner circumferential portion of the protrusion 5 is taper-shaped in this manner, the strength of the protrusion 5 can be adequately maintained, provided that the wall thickness W of the tip portion of the protrusion 5 satisfies the relationship represented by above Expression (2).

(Modified Example 1)

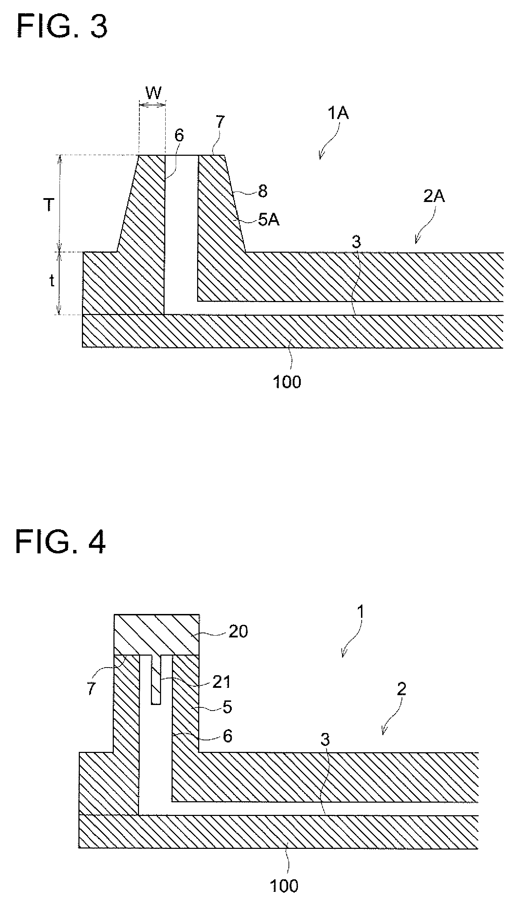

Next, Modified Example 1 of the above- described embodiment will now be described with reference to FIG. 3. FIG. 3 is a sectional view of part of a microchip according to Modified Example 1.

A microchip 1A according to Modified Example 1 is provided with a resin substrate 2A in which a flow channel groove is formed on the surface and a resin substrate 100 having a flat plate shape. The surface where a flow channel groove has been formed is placed on the inward side to join the resin substrate 2A and the resin substrate 100, whereby a fine flow channel 3 is formed by the flow channel groove to produce a microchip 1A having a fine flow channel 3 created by a flow channel groove in the interior.

In the resin substrate 2A in which a flow channel groove has been formed, a penetrated hole 6, which penetrates in the thickness direction of the substrate, is formed. This penetrate hole 6 is fanned so as to be in contact with the flow channel groove, becoming an opening portion to connect a fine flow channel 3 and the outside by joining the resin substrate 2A and the resin substrate 100. Further, in the resin substrate 2A, a cylindrical protrusion 5A is formed on the surface of the opposite side of the surface where the flow channel groove is formed. This protrusion 5A is projected in the thickness direction of the resin substrate 2A and formed around the penetrated hole 6.

In Modified Example 1, the side surface 8 of the outside of the protrusion 5A is taper-shaped. Namely, the outer diameter of the protrusion 5A is gradually decreased toward the tip portion of the protrusion 5A. Further, the side surface 8 of the outer circumferential portion of the protrusion 5A is linear. On the other hand, the diameter of the penetrated hole 6 is constant in the height direction of the protrusion 5A. Namely, the diameter of the penetrated hole 6 is constant at every height Therefore, in Modified Example 1, the wall thickness of the protrusion 5A is gradually decreased toward the tip portion of the protrusion 5A, being smallest in the leading tip portion 7. Further, the leading tip portion 7 of the protrusion 5A has a flat surface.

Also in Modified Example 1, the thickness t of the resin substrate 2A and the height T of the protrusion 5A satisfy the relationship represented by above Expression (1). Further, the thickness W of the tip portion of the protrusion 5A and the height T of the protrusion 5A satisfy the relationship represented by above Expression (2). In Modified Example 1, the wall thickness in the leading tip portion 7 of the protrusion 5A is designated as the thickness W and then the thickness W satisfies the relationship represented by Expression (2).

As described above, in a taper-shaped protrusion 5A, the wall thickness of the leading tip portion 7 of a protrusion 5A is allowed to be at least (T/10), whereby in the same manner as in the above embodiment, the strength of the protrusion 5A can be adequately maintained. Especially, the wall thickness of the leading tip portion 7 whose thickness is smallest is allowed to be at least (T/10), whereby the strength of the protrusion 5A can be adequately maintained.

Herein, the side surface of the inner circumferential portion of the protrusion 5A may be taper-shaped. Also in this case, when the wall thickness W of the tip portion of the protrusion 5A satisfies the relationship represented by Expression (2), the strength of the protrusion 5A can be adequately maintained.

(Application Examples)

Subsequently, application examples employing a microchip 1 according to the embodiment and a microchip 1A according to Modified Example 1 will now be described with reference to FIG. 4. FIG. 4 is a sectional view of part of a microchip according to Application Examples. In the microchip 1 according to the embodiment, the leading tip portion 7 of a protrusion 5 has a flat surface. In this manner, the leading tip portion 7 is allowed to be flat, whereby the contact area for a liquid introducing device 20 to be connected to the microchip 1 is increased. Thereby, the sealing performance between the protrusion 5 and the liquid introducing device 20 is enhanced, whereby leakage of a liquid sample in the protrusion 5 can be prevented.

The liquid introducing device 20 has a nozzle 21 to introduce a liquid sample into a fine flow channel 3 of the microchip 1. The diameter of this nozzle 21 is smaller than that of a penetrate hole 6 of the microchip 1. When the liquid sample is introduced into the fine flow channel 6 of the microchip 1, the nozzle 21 is inserted into the penetrated hole 6 of the microchip 1 and then the liquid introducing device 20 is placed on the leading tip portion 7 of the protrusion 5. Since the leading tip portion 7 has a flat surface, the joint area between the liquid introducing device 20 and the leading tip portion7 is increased. Thereby, the sealing performance between the leading tip portion 7 and the liquid introducing device 20 is enhanced, whereby a gap between the leading tip portion 7 and the liquid introducing device 20 tends not to be created. Thereby, the liquid sample can be prevented from leaking between the protrusion 5 and the liquid introducing device 20.

Also in the microchip 1A according to Modified Example 1, the leading tip portion 7 of a protrusion 5A has a flat surface. Thereby, the sealing performance between the leading tip portion 7 and the liquid introducing device 20 is enhanced, whereby leakage of a liquid sample can be prevented.

(Modified Example 2)

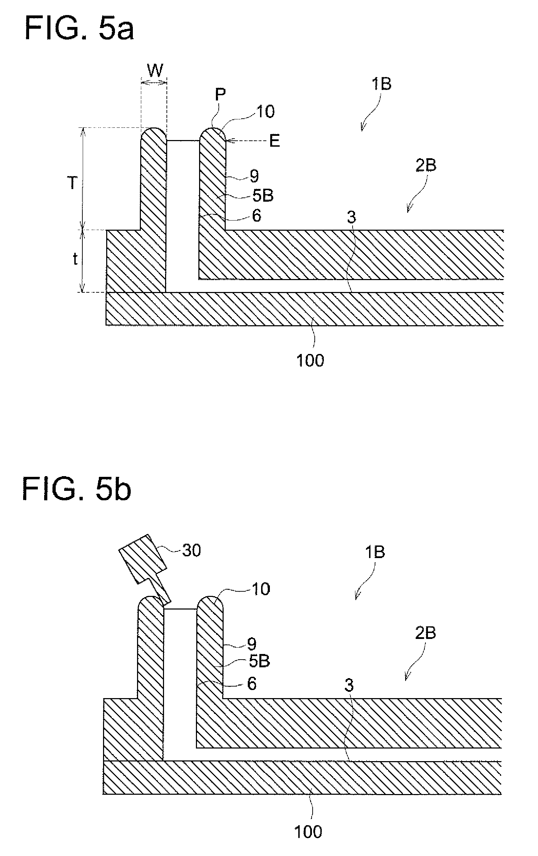

Next, Modified Example 2 of the embodiment will now be described with reference to FIG. 5. FIG. 5 is a sectional view of part of microchip according to Modified Example 2.

A microchip 1 B according to Modified Example2 is provided with a resin substrate 2B in which a flow channel groove is formed on the surface and a resin substrate 100 having a flat plate shape. The surface where the flow channel groove is formed is placed on the inward side and then the resin substrate 2B and the resin substrate 100 are joined together, whereby a fine flow channel 3 is formed by the flow channel groove to produce a microchip 1 B having a fine flow channel 3 created by a flow channel groove in the interior.

In the resin substrate 2B where a flow channel groove has been formed, a penetrated hole 6, which penetrates in the thickness direction of the substrate, is formed. This penetrate hole 6 is formed so as to be in contact with the flow channel groove, becoming an opening portion to connect a fine flow channel 3 and the outside by joining the resin substrate 2B and the resin substrate 100. Further, in the resin substrate 2B, a cylindrical protrusion 5B is formed on the surface of the opposite side of the surface where the flow channel groove is formed. This protrusion 5B is projected in the thickness direction of the resin substrate 2B and formed around the penetrated hole 6.

In Modified Example 2, as shown in FIG. 5A, the diameter of the penetrated hole 6 is constant in the height direction of the protrusion 5B. On the other hand, the side surface 9 of the outer circumferential portion of the protrusion 5 is linear. In a portion where the side surface 9 is linear, the outer diameter of the protrusion 5 is constant in the height direction of the protrusion 5B. Namely, in a portion where the side surface 9 of the outer circumferential portion is linear, the wall thickness W of the protrusion 5B is constant in the height direction of the protrusion 5B. In this manner, in a portion where the side surface 9 of the circumferential portion is linear, the wall thickness of the protrusion 5B is constant at every height. On the other hand, the tip portion 10 of the protrusion 5B has a curved surface. The tip portion 10 has a curved surface, whereby the leading tip portion P of the protrusion 5B is formed on the inside of the outer circumferential portion of the protrusion 5B. Part of the tip portion 10 may have a curved surface or the entire tip portion 10 may have a curved surface. In this manner, the protrusion 5B contains a portion having a linear side surface 9 and a tip portion 10 having a curved surface.

Also in Modified Example 2, the thickness t of a resin substrate 2B and the height T of a protrusion 5B satisfy the relationship represented by above Expression (1).

In Modified Example 2, the boundary of a linear side surface 9 and a tip portion 10 having a curved surface is defined as the terminal end portion E of the linear side surface 9. In Modified Example 2, at the terminal end portion E, the relationship represented by above Expression (2) is satisfied. Namely, the wall thickness of the terminal end portion E of a protrusion 5B is defined as the thickness W, and the thickness W and the height T of the protrusion 5B satisfy the relationship represented by Expression (2).

Further, an area included in the range of about 0.5 mm from the leading tip portion P of the protrusion 5B may be defined as the tip portion of the protrusion 5B. In this case, the wall thickness of the tip portion included in this area is defined as the thickness W, and then the thickness W and the height T of the protrusion 5B need only to satisfy the relationship represented by Expression (2).

As described above, in a protrusion 5B with a tip portion 10 having a curved surface, the wall thickness of the tip portion of the protrusion 5B is allowed to be at least (T/10), whereby in the same manner as in the above embodiment, the strength of the protrusion 5B can be adequately maintained.

Next, an application example of a microchip 1B according to Modified Example 2 is shown in FIG. 5B. In a microchip 1B according to Modified Example 2, the tip portion 10 of a protrusion 5B has a curved surface. In this manner, the tip portion 10 is allowed to have such a curved surface, whereby when an electrode or a device is inserted into a microchip, the tip portion 10 factions as a guide for the insertion. The top portion 10 functions as the guide, where such an electrode or a device is easily placed in a microchip. Since an electrode or a device is easily placed in a microchip, a test can be smoothly carried out. Thereby, during testing, a liquid sample can be presented from evaporating,

For example, as shown in FIG. 5B, when the tip portion of an electrode 30 is inserted into a penetrated hole 6, the tip portion of the electrode 30 is allowed to be in contact with the tip portion 10 having a curved surface of the protrusion 5B. Then, as the top portion of the electrode 30 is allowed to be in contact with the tip portion 10 having a curved surface, the tip portion of the electrode 30 is inserted into the penetrated hole 6. In this manner, such a top portion 10 having a curved surface is employed as a guide, whereby an electrode 30 can be easily inserted into a penetrated hole 6 and placed in a microchip 1B.

Herein, the side surface 9 of the outer circumferential portion of the protrusion 5B may be taper-shaped in the same manner as in the microchip 1A according to Modified Example 1. Further, the side surface of the inner circumferential portion of the protrusion 5B may be taper-shaped. In this manner, even in cases in which the side surface of the protrusion 5B is taper-shaped, when the wall thickness W of the tip portion of the protrusion 5B satisfies the relationship represented by Expression (2), the strength of the protrusion 5B can be adequately maintained.

(Modified Example 3)

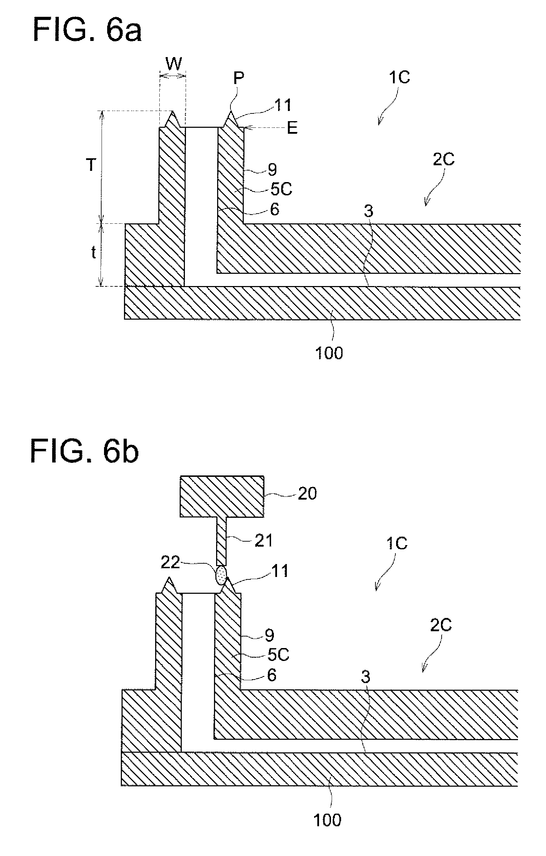

Next, Modified Example 3 of the embodiment will now be described with reference to FIG. 6. FIG. 6 is a sectional view of part of a microchip according to Modified Example 3.

A microchip 1C according to Modified Example 3 is provided with a resin substrate 2C in which a flow channel groove is formed on the surface and a resin substrate 100 having a flat plate shape. The surface where the flow channel groove is formed is placed on the inward side and then the resin substrate 2C and the resin substrate 100 are joined together, whereby a fine flow channel 3 is formed by the flow channel groove to produce a microchip 1C having a fine flow channel 3 created by a flow channel groove in the interior.

In the resin substrate 2C in which a flow channel groove has been formed, a penetrated hole 6, which penetrates in the thickness direction of the substrate, is formed. This penetrate hole 6 is formed so as to be in contact with the flow channel groove, becoming an opening portion to connect a fine flow channel 3 and the outside by joining the resin substrate 2C and the resin substrate 100. Further, in the resin substrate 2C, a cylindrical protrusion 5C is formed on the surface of the opposite side of the surface where the flow channel groove is formed. This protrusion 5C is projected in the thickness direction of the resin substrate 2C and formed around the penetrated hole 6.

In Modified Example 3, as shown in FIG. 6A, the diameter of the penetrated hole 6 is constant in the height direction of the protrusion 5C. On the other hand, the side surface 9 of the outer circumferential portion of the protrusion 5C is linear. In a portion where the side surface 9 is linear, the outer diameter of the protrusion 5C is constant in the height direction of the protrusion 5C. Namely, in a portion where the side surface 9 of the outer circumferential portion is linear, the wall thickness W of the protrusion 5B is constant in the height direction of the protrusion 5C. In this manner, in a portion where the side surface 9 of the outer circumferential portion is linear, the wall thickness of the protrusion 5C is constant at every height On the other hand, in the upper end portion of the protrusion 5C, a projected portion 11 having a convex shape is formed. As shown in the drawing, this projected portion 11 is formed by having a step portion on the inside of the outer circumference with respect to the wall thickness W of the protrusion 5C. Namely, the width (the wall thickness) of the base of the projected portion 11 is formed so as to be smaller than the wall thickness W of the protrusion 5C. Herein, the upper end portion of the protrusion 5C where the projected portion 11 is formed may have a flat surface as shown or have a curved surface. Further, the projected portion 11 has a convex shape whose width is gradually decreased toward the tip thereof. In this manner, a projected portion 11 is formed in the upper end portion of a protrusion 5C, whereby the leading tip portion P of the projected portion 11 is formed on the inside of the outer circumferential portion of the protrusion 5C. Further, the projected portion 11 may be formed in part of the upper end portion of the protrusion 5C or over the entire upper end portion. In this manner, the protrusion 5C contains a portion having a linear side surface 9 and a convex projected portion 11. Herein, the height of the projected portion 11 needs only to fall in the range of 0.001 mm - 0.5 mm, as an example.

Also in Modified Example 3, the thickness t of a resin substrate 2C and the height T of a protrusion 5C satisfy the relationship represented by above Expression (1).

In Modified Example 3, the boundary of a linear side surface 9 and a projected portion 11 is defined as the terminal end portion E of the linear side surface 9. In Modified Example 3, at the terminal end portion E, the relationship represented by above Expression (2) is satisfied. Namely, the wall thickness of the terminal end portion E of a protrusion 5C is defined as the thickness W, and the thickness W and the height T of the protrusion 5C satisfy the relationship represented by Expression (2).

Further, an area included in the range of about 0.5 mm from the leading tip portion P of the protrusion 5C may be defined as the tip portion of the protrusion 5C. In this case, the wall thickness of the tip portion included in this area is defined as the thickness W and then the thickness W and the height T of the protrusion 5C need only to satisfy the relationship represented by Expression (2).

As described above, in a protrusion 5C having a convex projected portion 11, when the wall thickness of the tip portion of the protrusion 5C is allowed to be at least (T/10), the strength of the protrusion 5C can be adequately maintained in the same manner as in the above embodiment.

Next, an application example of a microchip 1C according to Modified Example 3 is shown in FIG. 6B. In a microchip 1C according to Modified Example 3, a convex projected portion 11 is formed in the upper end portion of a protrusion 5C. In this manner, such a projected portion 11 is formed in the upper end portion of the protrusion 5C, whereby when an electrode or a liquid introducing device having been inserted into a penetrated hole 6 is removed from the penetrated hole 6, liquid dripping can be inhibited.

For example, as shown in FIG. 6B, when the nozzle 21 of a liquid introducing device 20 is removed from the penetrated hole 6, a liquid 22 having adhered to the tip of the nozzle 21 is brought into contact with the inside of the projected portion 11. Thereby, the liquid 22 having been brought into contact with the inside of the projected portion 11 is allowed to flow into the penetrated hole 6, whereby the liquid 22 can be prevented from dripping on the outside of the protrusion 5C.

Herein, the side surface 9 of the outer circumferential portion of the protrusion 5C may be taper-shaped in the same manner as in the microchip 1A according to Modified Example 1. Further, the side surface of the inner circumferential portion of the protrusion 5C may be taper-shaped. In this manner, even in cases in which the side surface of the protrusion 5C is taper-shaped, when the wall thickness W of the tip portion of the protrusions 5C satisfies the relationship represented by Expression (2), the strength of the protrusion 5C can be adequately maintained.

**EXAMPLES**

Next, specific examples of the above-described embodiment will now be described.

(Resin Substrate)

Using an injection molding machine, an acrylic resin (DELPET produced by Asahi Kasei Corp.), being a transparent resin material, was molded to produce a resin substrate of the flow channel side in which a plurality of flow channel grooves and a plurality of penetrated holes and protrusions were formed. This resin substrate of the flow channel side corresponds to one example of the resin substrate 2 in which a flow channel groove, a penetrated hole 6, and a protrusion 5 are formed in the embodiment.

The size of the resin substrate of the flow channel side is shown below.

Side length = 50 mm
Thickness =1 mm
Width and depth of the flow channel groove 3 = 50 $\mu$m

Further, using an acrylic resin as a transparent resin material, a resin substrate of the cover side was produced in which the thickness of the substrate was I mm and the length of one side was 50 mm. This resin substrate of the cover side corresponds to the resin substrate 100 in the embodiment

(Joining)

Subsequently, the surface where the flow channel grooves were formed was placed on the inward side and then the resin substrate of the flow channel side and the resin substrate of the cover side were stacked. In this state, using a heat-pressing machine, the two resin substrates were sandwiched by the heating plates heated at 90 °C, followed by being applied with a pressure of 9.8 N/cm$^2$ and maintained for 1 minute to produce a microchip.

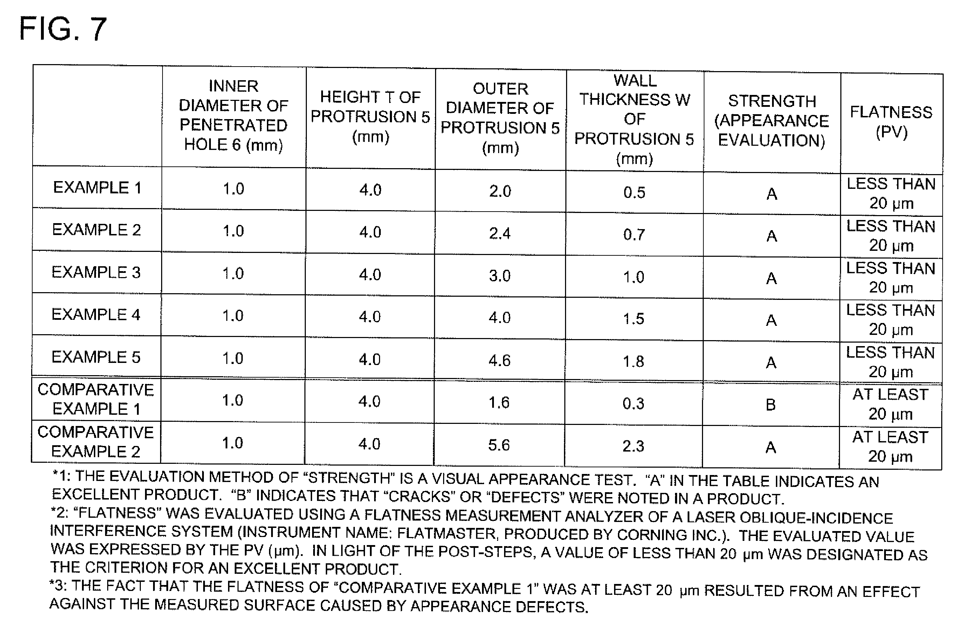

The inner diameter of the penetrated hole 6, and the height T, the outer diameter, and the wall thickness W of the protrusion 5 were employed as parameters to produce resin substrates used for the flow channel side in which each value was changed, and then microchips were produced. The results of Example 1 - Example 5 and Comparative Examples 1 and 2 are shown in the table of FIG. 7.

In Example 1 - Example 5, the wall thickness W of the protrusion 5 and the height T thereof satisfy the relationship of (T/10) ≤ W ≤ (T/2) as represented by above Expression (2).

In Example 1 - Example 5 and Comparative Examples 1 and 2, the inner diameter of the penetrated hole 6 and the height T of the protrusion 5 were allowed to be 1.0 mm and 4.0 mm, respectively. Then, the outer diameter and the wall thickness W of the protrusion 5 were changed.

In Example 1 - Example 5, the wall thickness W satisfies the following relationship based on Expression (2):

$$0.4\,\mathrm{mm} \leq \mathrm{W} \leq 2.0\,\mathrm{mm}$$

For example, in Example 1, the outer diameter of the protrusion 5 was allowed to be 2.0 mm and then the wall thickness W thereof was allowed to be 0.5 mm.

In Example 2, the outer diameter of the protrusion 5 was allowed to be 2.4 mm and then the wall thickness W thereof was allowed to be 0.7 mm.

In Example 3, the outer diameter of the protrusion 5 was allowed to be 3.0 mm and then the wall thickness W thereof was allowed to be 1.0 mm.

In Example 4, the outer diameter of the protrusion 5 was allowed to be 4.0 mm and then the wall thickness W thereof was allowed to be 1.5 mm.

In Example 5, the outer diameter of the protrusion 5 was allowed to be 4.6 mm and then the wall thickness W thereof was allowed to be 1.8 mm.

On the other hand, in Comparative Example 1, the outer diameter of the protrusion 5 was allowed to be 1.6 mm and then the wall thickness W thereof was allowed to be 0.3 mm.

In Comparative Example 2, the outer diameter of the protrusion 5 was allowed to be 5.6 mm and then the wall thickness W thereof was allowed to be 2.3 mm.

As described above, in Example 1 - Example 5, the wall thickness W and the height T of the protrusion 5 satisfy the relationship of Expression (2), and in Comparative Examples 1 and 2, the wall thickness W and the height T do not satisfy the relationship of Expression (2).

(Evaluation)

With regard to Example I - Example 5 and Comparative Examples I and 2, the strength of the protrusion 5 and the flatness of the resin substrate 2 of the flow channel side were evaluated.

(Strength of Protrusion 5)

In the evaluation of the strength of the protrusion 5, an appearance test was visually carried out for the protrusion 5 to confirm the presence or absence of cracks or defects. In the table of FIG. 7, "A" indicates an excellent product in which no cracks or defects were noted, and "B" indicates a substrate in which cracks or defects were noted. In Example 1 - Example 5, no cracks or defects were noted in the protrusion 5. In this manner, in the protrusions 5 according to Example 1 - Example 5, no cracks or defects exist. Thereby, the realization of adequate strength was confirmed.

Further, in Comparative Example 2, no cracks or defects were noted in the protrusion 5. It is conceivable that the protrusion 5 according to Example 2 had a large wall thickness W, whereby adequate strength was realized. In contrast, in Comparative Example 1, cracks or defects were noted in the protrusion 5. Therefore, it is conceivable that the protrusion 5 according to Example 1 had a small wall thickness W, whereby adequate strength was not realized.

(Flatness of Resin Substrate 2)

The flatness ofthe resin substrate 2 was evaluated in which the surface roughness of the joint surface of the resin substrate 2 was determined using an interferometer. As the interferometer, a flatness measurement analyzer of a laser oblique-incidence interference system (instrument name: FlatMaster, produced by Coming Inc.) was used. Specifically, the difference between the maximum height and the minimum height of the surface (the PV value) was determined to evaluate the flatness of the resin substrate 2. Since the joint surface of the resin substrate 2 is joined to the resin substrate of the cover side, the surface roughness of the joint surface is preferably less than 20 $\mu$m. Therefore, a substrate having a PV value of less than 20 $\mu$m was ranked as an excellent product.

The results of Example 1 - Example 5 confirmed that the PV value of the joint surface of the resin substrate 2 was less than 20 $\mu$m, whereby the criterion for an excellent product was satisfied. In contrast, the results of Comparative Examples 1 and 2 confirmed that the PV value of the joint surface of the resin substrate 2 was at least 20 $\mu$m, whereby the criterion for an excellent product was not satisfied. In Comparative Example 2, it is conceivable that the wall thickness W of the protrusion 5 was excessively large, whereby the flatness of the joint surface of the resin substrate 2 was adversely affected. Further, in Comparative Example 1, it is conceivable that appearance defects in the protrusion 5 adversely affected the flatness of the joint surface.

As described above, in Example 1- 5, the relationship of the height T and the wall thickness W of the protrusion 5 satisfied the relationship of Expression (2), whereby the strength of the protrusion 5 was adequately achieved. Further, with regard to the joint surface of the resin substrate 2, enhanced flatness was realized. On the other hand, in Comparative Example 1, the wall thickness W of the protrusion 5 was excessively small, whereby appearance defects occurred and then the flatness of the joint surface of the resin substrate 2 was degraded. Further, in Comparative Example 2, the strength of the protrusion 5 was maintained and no appearance defects occurred. However, since the wall thickness W was excessively large, the flatness of the joint surface of the resin substrate 2 was degraded. In this manner, according to Examples of the present invention, the strength of the protrusion 5 was adequately realized and excellent flatness was realized with respect to the joint surface, compared to Comparative Examples.

Herein, as just one example, the material and size of the resin substrate each shown in above Examples were employed that by no means limit the scope of the present invention. For example, also when any resin listed in the above embodiment is used, the same results as in Examples are obtained. Further, with regard to the microchips according to Modified Example 1 - Modified Example 3, the same results as in Examples are also obtained.

**DESCRIPTION OF THE SYMBOLS**

| | |
|---|---|
| 1, 1A, 1B, 1C: | microchip |
| 2, 2A, 2B, 2C, 100: | resin substrate |
| 3: | fine flow channel |
| 5, 5A, 5B, 5C: | protrusion |
| 6: | penetrated hole |
| 8, 9: | side surface |
| 10: | tip portion |
| 11: | projected portion |
| 20: | liquid introducing device |
| 21: | nozzle |
| 22: | liquid |
| 30: | electrode |

**Claims**

1. A microchip configured to be capable of introducing a liquid sample through a penetrated hole, wherein a flow channel groove is formed on a surface of at least one resin substrate of the two resin substrates and the two resin substrates are joined together so that the surface on which the flow channel groove is formed is placed on an inward side; the penetrated hole communicatively connecting an outside and the flow channel groove is formed in at least one resin substrate of the two resign substrates; and, a protrusion having a shape, surrounding the penetrated hole, and projecting from a surface of an opposite side of the joined surface of the two resin substrates to an outside direction is formed in a part of the resin substrate where the penetrated hole is formed,
   **characterized by** that a wall thickness W in a tip portion of the protrusion and a height T of the protrusion satisfy the following relationship:

$$(T/10) \leq W \leq (T/2)$$

2. A microchip configured to be capable of introducing a liquid sample through a penetrated hole, wherein a flow channel groove is formed on a surface of at least one resin substrate of the two resin substrates and the two resin substrates are joined together so that the surface on which the flow channel groove is formed is placed on an inward side; the penetrated hole communicatively connecting an outside and the flow channel groove is formed in at least one resin substrate of the two resin substrates; and a protrusion having a shape surrounding the penetrated hole and projected from a surface of an opposite side of the joined surface of the two resin substrates to an outside direction is formed, **characterized by** that a projected portion having small wall thickness is configured to be funned in an upper end portion of the protrusion via a step portion to be capable of inhibiting liquid dripping of a liquid sample to be introduced.

3. The microchip described in claim 2, **characterized by** that a wall thickness W in a tip portion of the protrusion and a height T of the protrusion satisfy the following relationship:

$$(T/10) \leq W \leq (T/2)$$

4. The microchip described in claim 1, **characterized by** that the tip portion of the protrusion has a flat surface.

5. The microchip described in claim 1, **characterized by** that a projected portion having small wall thickness is formed in an upper end portion of the protrusion via a step portion to inhibit liquid dripping of a liquid sample to be introduced.

6. The microchip described in any one of claims 2, 3 and 5, **characterized by** that the projected portion is formed via a step portion on an inside of an outer circumferential portion of the protrusion.

7. A microchip configured to be capable of introducing a liquid sample through a penetrated hole, wherein a flow channel groove is formed on a surface of at least one resin substrate of the two resin substrates; the two resin substrates are joined together so that the surface on which the flow channel groove is formed is placed on an inward side; the penetrated hole communicatively connecting an outside and the flow channel groove is formed in at least one resin substrate of the two resin substrates; and a protrusion having a shape surrounding the penetrated hole and projected from a surface of an opposite side of the joined surface of the two resin substrates to an outside direction is formed, **characterized by** that a tip portion of the protrusion has a curved surface.

# FIG. 1

# FIG. 2

FIG. 3

FIG. 4

## FIG. 5a

## FIG. 5b

# FIG. 6a

# FIG. 6b

# FIG. 7

| | INNER DIAMETER OF PENETRATED HOLE 6 (mm) | HEIGHT T OF PROTRUSION 5 (mm) | OUTER DIAMETER OF PROTRUSION 5 (mm) | WALL THICKNESS W OF PROTRUSION 5 (mm) | STRENGTH (APPEARANCE EVALUATION) | FLATNESS (PV) |
|---|---|---|---|---|---|---|
| EXAMPLE 1 | 1.0 | 4.0 | 2.0 | 0.5 | A | LESS THAN 20 μm |
| EXAMPLE 2 | 1.0 | 4.0 | 2.4 | 0.7 | A | LESS THAN 20 μm |
| EXAMPLE 3 | 1.0 | 4.0 | 3.0 | 1.0 | A | LESS THAN 20 μm |
| EXAMPLE 4 | 1.0 | 4.0 | 4.0 | 1.5 | A | LESS THAN 20 μm |
| EXAMPLE 5 | 1.0 | 4.0 | 4.6 | 1.8 | A | LESS THAN 20 μm |
| COMPARATIVE EXAMPLE 1 | 1.0 | 4.0 | 1.6 | 0.3 | B | AT LEAST 20 μm |
| COMPARATIVE EXAMPLE 2 | 1.0 | 4.0 | 5.6 | 2.3 | A | AT LEAST 20 μm |

*1: THE EVALUATION METHOD OF "STRENGTH" IS A VISUAL APPEARANCE TEST. "A" IN THE TABLE INDICATES AN EXCELLENT PRODUCT. "B" INDICATES THAT "CRACKS" OR "DEFECTS" WERE NOTED IN A PRODUCT.

*2: "FLATNESS" WAS EVALUATED USING A FLATNESS MEASUREMENT ANALYZER OF A LASER OBLIQUE-INCIDENCE INTERFERENCE SYSTEM (INSTRUMENT NAME: FLATMASTER, PRODUCED BY CORNING INC.). THE EVALUATED VALUE WAS EXPRESSED BY THE PV (μm). IN LIGHT OF THE POST-STEPS, A VALUE OF LESS THAN 20 μm WAS DESIGNATED AS THE CRITERION FOR AN EXCELLENT PRODUCT.

*3: THE FACT THAT THE FLATNESS OF "COMPARATIVE EXAMPLE 1" WAS AT LEAST 20 μm RESULTED FROM AN EFFECT AGAINST THE MEASURED SURFACE CAUSED BY APPEARANCE DEFECTS.

**INTERNATIONAL SEARCH REPORT**

| International application No. |
| --- |
| PCT/JP2009/062881 |

A. CLASSIFICATION OF SUBJECT MATTER
G01N35/08(2006.01)i, B01J19/00(2006.01)i, B81B1/00(2006.01)i, G01N37/00
(2006.01)i

According to International Patent Classification (IPC) or to both national classification and IPC

B. FIELDS SEARCHED

Minimum documentation searched (classification system followed by classification symbols)
G01N35/08, B01J19/00, B81B1/00, G01N37/00

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2006-234600 A (Sumitomo Bakelite Co., Ltd. et al.),<br>07 September, 2006 (07.09.06),<br>Full text; all drawings<br>(Family: none) | 1,4<br>2,3,5-7 |
| Y | US 6926313 B1 (Renzi),<br>09 August, 2005 (09.08.05),<br>Fig. 1B<br>(Family: none) | 2,3,5,6 |
| Y | US 2003/0082632 A1 (Shumate),<br>01 May, 2003 (01.05.03),<br>Fig. 4<br>(Family: none) | 7 |

[X] Further documents are listed in the continuation of Box C.   [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>14 September, 2009 (14.09.09) | Date of mailing of the international search report<br>06 October, 2009 (06.10.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/062881 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-345791 A  (Becton, Dickinson and Co.), 03 December, 2002 (03.12.02), Par. No. [0031]; Fig. 10 & US 2002/0143297 A1    & EP 1245283 A3 & AU 2935802 A          & CA 2379552 A & CN 1382965 A | 1-7 |
| A | JP 2006-038809 A  (Shimadzu Corp.), 09 February, 2006 (09.02.06), Full text; all drawings (Family: none) | 1-7 |
| A | US 2006/0078471 A1  (Witty et al.), 13 April, 2006 (13.04.06), Full text; all drawings & EP 1805501 A          & WO 2006/042332 A2 | 1-7 |
| A | JP 2006-058280 A  (Fuji Photo Film Co., Ltd.), 02 March, 2006 (02.03.06), Par. No. [0186]; Fig. 7 & US 2007/0178521 A1    & EP 1725866 A & WO 2005/088300 A | 1-7 |
| A | WO 2008/096570 A1  (Konica Minolta Medical & Graphic, Inc.), 14 August, 2008 (14.08.08), Full text; all drawings (Family: none) | 1-7 |

Form PCT/ISA/210 (continuation of second sheet) (April 2007)

## INTERNATIONAL SEARCH REPORT

| International application No. |
|---|
| PCT/JP2009/062881 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
   see extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2009/062881

Continuation of Box No.III of continuation of first sheet(2)

The claims include claims 1, 2, and 7 as independent claims. A matter common among claims 1, 2, and 7 resides in a microchip including two resinous bases, wherein at least one of the resinous bases has a channel groove formed in a surface thereof, the two resinous bases have been bonded together so that the side having the channel groove faces inward, the at least one of the two resinous bases has a through-hole which connects the outside to the channel groove, the resinous base having the through-hole partly has a protrusion which projects outward from the surface opposite to the bonded surface where the two resinous bases have been bonded and which has such a shape that the protrusion surrounds the through-hole, and the microchip has been configured so that a liquid sample can be introduced through the through-hole. However, such a microchip is described in a prior art document (JP 2006-234600 A (Sumitomo Bakelite Co., Ltd. et al.), 07 September, 2006 (07.09.06)) cited in the description of the present invention.

In view of this, the invention set forth in claim 1 pertains to a microchip which is intended to maintain the sufficient strength of the protrusion. The special technical feature thereof resides in that the wall thickness (W) of the end of the protrusion and the height (T) of the protrusion satisfy the relationship $(T/10) \leq W \leq (T/2)$.

The invention set forth in claim 2 pertains to a microchip which is intended to inhibit an introduced liquid from sagging. The special technical feature thereof resides in that a projection having a small wall thickness has been formed on the end of the protrusion so that a step is interposed therebetween.

The invention set forth in claim 7 pertains to a microchip which is intended to provide a part serving as an insertion guide when an electrode or a device is inserted into the microchip. The special technical feature thereof resides in that the end of the protrusion is curved.

Consequently, the inventions set forth in claims 1, 2, and 7 are not considered to be so linked as to form a single general inventive concept. The claims of the present application involve three inventions classified as claims 1, 4, and 5, claims 2, 3, and 6, and claim 7.

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006234600 A